# EUROPEAN PATENT APPLICATION

(11) **EP 0 972 964 A2**
(43) Date of publication of application: **19.01.2000**
(21) Application number: 99305439.4
(22) Date of filing: 08.07.1999
(51) Int. Cl.: F16F 13/26

(54) **Vibration damping arrangements**

(30) Priority: 16.07.1998 GB 9815513
(71) Applicant: DRAFTEX INDUSTRIES LIMITED, Edinburgh EH2 3AP, Scotland (GB)
(72) Inventor: Chauvet, Ludovic, 44470 Mauves sur Loire (FR); Chauvet, Stéphane, 44860 Pont Saint Martin (FR); Drumel, Philippe, 44470 Sainte Luce sur Loire (FR)
(74) Representative: Foster, David Martyn

(57) **Abstract**

An engine mount for a vehicle has a first rigid fixture (12) for attachment to the engine and a second rigid fixture (13) for attachment to the chassis or body, an armature (14) attached to the second rigid fixture (13), and a resilient rubber support (10) between the first fixture (12) and the armature (14) for flexing in response to engine vibrations. The rubber support (10) defines a working chamber (22) containing hydraulic fluid which is in communication with a compensation chamber (37) via a helical conduit (38), so that engine vibrations are at least partially damped by oscillation of fluid in the conduit (38) between the two chambers (22,37). Two apertured grills (24,52) define a valve chamber (51) in which a flexible disc valve (46) is oscillatable. The lower grill (52) is rotatable by means of a control rod extending externally of the engine mount. It carries inclined ramps (72) cooperating with similar ramps on a lower plate (55) so that rotation of the lower grill (52) alters the free play of the disc valve (46). In this way, therefore, the flap valve (46) can be controllably rendered operative over a wide range of vibration amplitudes so as (for example) to reduce the dynamic stiffness of the engine mount during engine idling. Other means of adjusting the operation of the flap valve are described.

## Description

The invention relates to vibration damping arrangements. Vibration damping arrangements embodying the invention, and to be described in more detail below by way of example only, are in the form of engine mounts for mounting engines in motor vehicles. However, they may be used in other applications.

According to the invention, there is provided a vibration damping arrangement for damping relative vibrations between two rigid members, comprising a first rigid element for connection to one of the rigid members, a second rigid element for connection to the other rigid member, stiff resilient support material interconnecting the two rigid elements for resiliently flexing in response to the relative vibrations of the two rigid members, means defining a hollow chamber containing hydraulic fluid, the hollow chamber having a flexible wall arranged to flex in response to the relative vibrations whereby to cause corresponding pressure variations within the hollow chamber, valve means operable to at least partially release the pressure in the chamber, and control means for selectively rendering the valve means operative.

According to the invention, there is further provided a hydroelastic engine mount for damping relative vibrations between the engine of a vehicle and the body of the vehicle, comprising a rigid armature for connection to one of the engine and the vehicle body, a rigid fixing element for attachment to the other of the engine and the body, resilient support material extending between the armature and the rigid fixing element for resiliently flexing in response to vibrations between the armature and the fixing element, a first flexible-walled chamber defined in part by the resilient support material, a second flexible-walled chamber, a conduit interconnecting the two chambers whereby hydraulic fluid can be passed through the conduit between the two chambers in response to resilient flexing of the resilient support material such that movement of the fluid through the conduit damps the vibrations, valve means comprising a movable valve member mounted to be subjected on one side to the pressure in the first chamber and to be subjected on the other side to the pressure in the second chamber, and control means operative to switch the valve means between a first setting in which the valve member is substantially prevented from movement and a second setting in which the valve member is substantially free to move.

Vibration damping arrangements embodying the invention, and in the form of engine mounts for motor vehicles, will now be described, by way of example only, with reference to the accompanying diagrammatic drawings in which:
Figure 1 is a section through one of the engine mounts;
Figure 2 is an enlarged view of part of Figure 1;
Figure 3 is a cross-section on the line III-III of Figure 1 but with a valve member removed;
Figure 4 is a perspective view of a movable grill used in the embodiment of Figures 1 to 3;
Figure 5 corresponds to Figure 3 but shows the engine mount in a different setting;
Figure 6 corresponds to Figure 1 and is a section through another of the engine mounts;
Figure 7 is an enlarged view of part of the engine mount of Figure 6;
Figure 8 is a cross-section on the line VIII-VIII of Figure 6;
Figure 9 is a perspective view of a valve member used in the engine mount of Figures 6 - 8;
Figure 10 corresponds to Figure 1 and is a section through a further one of the engine mounts;
Figure 11 is an enlarged view of part of the engine mount of Figure 10;
Figure 12 is a cross-section on the line XII-XII of Figure 10;
Figure 13 corresponds to Figure 1 and is a section through a further one of the engine mounts; and
Figure 14 is an enlarged view of part of the engine mount of Figure 13.

In all the embodiments shown, corresponding elements have the same reference numerals.

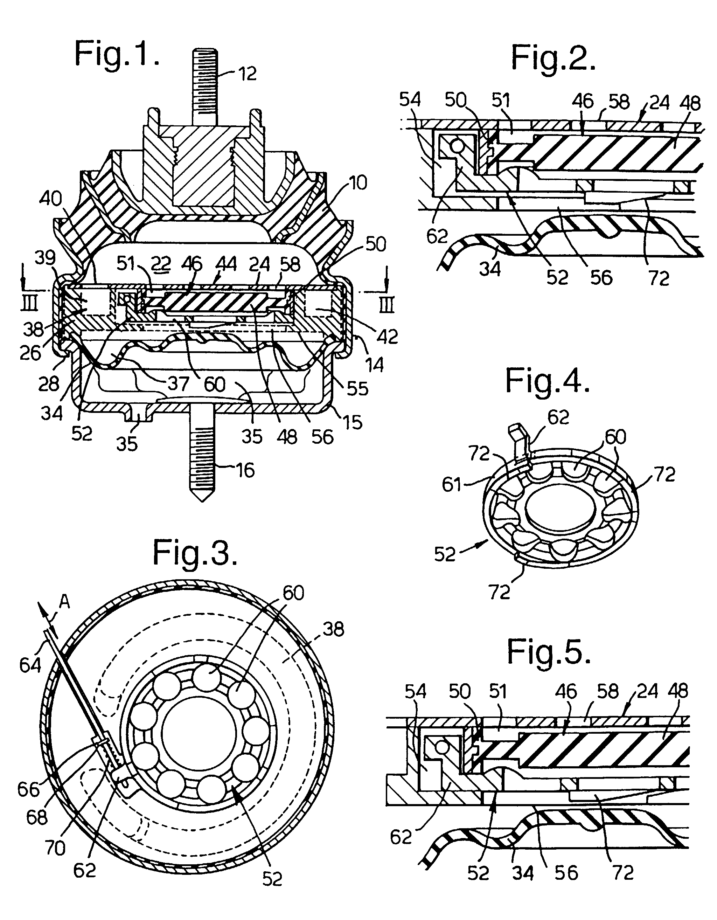

As shown in Figure 1, the engine mount comprises a support 10 made of stiff resilient material such as rubber which is mounted between the engine of the vehicle and the vehicle body or chassis. The support 10 is generally frusto-conical in shape. Its upper end is fast with a metal stud 12 by means of which an attachment is made to the engine of the vehicle. The base of the rubber support 10 is bonded to a metal armature 14 which in turn is rigid with a metal cover 15 carrying a stud 16 for attachment to the vehicle body. In this way, therefore, the engine of the vehicle is connected to the vehicle body by means of the stiff rubber support 10, which provides a resilient connection and helps to isolate engine vibrations from the vehicle body. In addition, however, the support assembly provides hydraulic damping as will now be explained.

The hollow interior of the support 10 provides a chamber ("working chamber") 22 of flattened conical shape and containing a suitable hydraulic fluid such as water with anti-freeze. The base of the working chamber 22 is defined by an upper plate or grill 24 which is supported by a valve body 26 made of stiff material, such as plastics material. The valve body 26 is held in position by a flange 28 surrounding an aperture in the lower part of the armature 14. The flange 28 supports the rigid metal cover 15 and a flexible membrane 34. The metal cover 15 defines a hollow interior 35 which is open to the atmosphere at 36. A compensation chamber 37 is defined between the flexible membrane 34 and the underside of the valve body 26.

Two means of interconnection between the working and compensation chambers 22,37 are provided. The first of these interconnections is via a helical or part-circular conduit 38 which is connected at one end 39 to the working chamber 22 via a hole 40 through the plate 24. At its other end 42, the conduit 38 is connected to the compensation chamber 37; the latter connection is not shown in the Figures.

The second interconnection means between the chambers 22 and 37 is provided by a valve assembly 44. The valve assembly incorporates a flexible disc valve 46. The disc valve 46 may be made of rubber and has a flexible central portion 48 which is integral with a circular more rigid flange portion 50. The disc valve 46 is supported in a valve chamber 51 defined between the upper grill 48 and a lower dish-shaped grill 52. Grill 52 rests in a circular recess 54 in the valve body 26 which is defined by a body part 55 having a large circular opening 56. The upper grill 48 has apertures 58 and the lower grill 52 has apertures 60.

The lower grill 52 is shown more clearly in Figure 4. As is shown there, the outer peripheral surface 61 of the lower grill 52 carries an arm 62. As shown in Figure 3 (from which the disc valve 46 is omitted for clarity), the arm 62 is connected to the end of a rod 64. Rod 64 slides in a housing 66 which is fixed to the valve body 26. Anchored inside the housing 66 is an apertured plate 68 through which the rod 64 extends and which engages one end of a compression spring 70 whose other end presses against the arm 62. In this way, the lower grill 52 is rotatably mounted within the circular recess 54 so as to be rotatable therein to a limited angular extent upon movement of the rod 64 in the direction of the arrows A.

As shown in Figure 4 in particular, the lower side of the grill 52 is provided with three inclined ramps 72, these ramps being spaced apart by 120°. Similar ramps 73 are mounted on a rim of the body part 55 around the aperture 56, of which one is shown in Figure 2. In this way, linear movement of the rod 64 turns the lower grill 52 within the recess 54 so that, upon rotation in one angular direction, engagement of the ramps 72 on the lower grill 52 with the ramps 73 on the body part 55 causes the lower grill 52 to move into an upper position within the recess 54 as shown in Figure 2 thus compressing and clamping the valve member 46, while angular movement in the opposite direction lowers the grill 52 in this recess as shown in Figure 5 thus releasing the clamping pressure on the valve member 46. Therefore, the depth of the valve chamber 51 containing the flexible valve member 46 can be adjusted.

In use, vibrations of the engine relative to the body are partly damped by the resilience and stiffness of the rubber support 10. In addition, however, the support 10 acts as a piston or pump on the fluid within the working chamber 22. If the vibrations are of relatively high amplitude and relatively low frequency, the liquid is pumped to and fro between the working chamber 24 and the compensation chamber 37 through the conduit 38. The pressure in the compensation chamber 37 is maintained constant and substantially equal to atmospheric pressure, because of the flexibility of the membrane 34 and the connection to the ambient atmosphere via the aperture 36. Therefore, the compensation chamber 37 produces substantially no resistance to the fluctuating liquid movement. Damping is achieved by oscillation of the liquid mass in the conduit 39 which acts as a dynamic damper. Maximum damping is obtained at the resonant frequency which depends on the characteristics of the conduit.

However, the operation of the engine mount is modified by the valve assembly 44.

Initially, the condition will be considered in which the lower grill 52 is raised to its maximum extent (by appropriate movement of the rod 64) as shown in Figure 2, so that the disc valve 46 has only a small amount of freedom of movement or play in the valve chamber 26.

In this condition and when the vibrations are of relatively high amplitude, the disc valve 46 is unable to follow the vibrations and is held substantially in a fixed position against the grill 52. There is therefore substantially no transfer of fluid pressure between the working and compensation chambers 22,37 via the valve 44. Pressure transfer therefore can only take place through the conduit 38.

However, when the engine vibrations have relatively low amplitude, the disc valve 46 is able to vibrate within the small space provided in the valve chamber 51 and thus provides a pressure interconnection between the chambers 22 and 37, even though substantially no fluid flow is taking place under these conditions through the conduit 38 because the frequency of vibrations is substantially different from the resonant frequency of the conduit. Therefore, the flexibility of the disc valve 46 short-circuits the conduit 38 and reduces the effective stiffness of the engine mount so that transmission of vibrations from the engine to the vehicle body is correspondingly reduced.

If, now, the lower grill 52 is moved downwards to its maximum extent within the recess 54, by appropriate movement of the rod 64, the disc valve 46 is given a substantially increased amount of play as shown in Figure 5. It is therefore able to vibrate not only in response to low amplitude engine vibrations but also at higher amplitude vibrations. In this way, therefore, it can short-circuit the conduit 38 not only at low amplitude vibrations but also at higher amplitude vibrations.

Therefore, the dynamic stiffness of the engine mount can be adjusted to be similar to that of the static stiffness. The stiffness of the engine mount can in this way be reduced when the engine is at idling speed, thus reducing the transmission of acoustic vibration to the vehicle body.

Adjustment of the position of the lower grill 52, and thus of the stiffness of the engine mount, can be automatically controlled, in dependence on engine speed, by means of an electro-magnetic device which is responsive to engine speed and appropriately adjusts the position of the rod 64. Such an electromagnetic control can be arranged to move the rod 64 into either one of its two extreme positions. Instead, however, the position of the rod 64 can be continuously variable - that is, it can be adjusted by the electromagnetic control into any position between its two extreme positions, thus providing a continuously variable adjustment of the permitted amount of play in the valve chamber 51. Instead of an electromagnetic control, other methods of adjusting the position of the rod 64 can be used.

The mechanism of Figures 1 to 5 for adjusting the position of the grill 52 is irreversible; that is, the slopes of the ramps are insufficiently steep to enable vibratory movement of the disc valve 56 to move the grill 52.

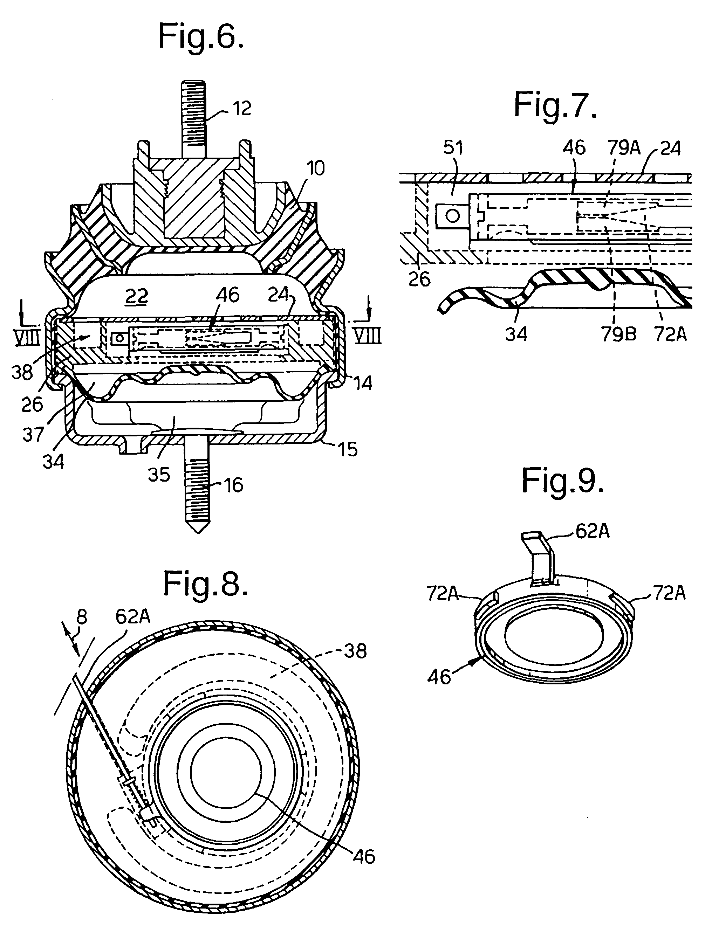

In the engine mount of Figures 6-9, the lower grill 52 is fixed in position. Instead, however, the disc valve 46 is now arranged to be rotatably mounted within the recess 54. As shown in Figure 9, it carries an arm 62A corresponding to the arm 62 of Figure 4. This arm 62A is connected to a rod 64 (Figure 8), longitudinal movement of which in the direction of the arrows A rotates the disc valve 46 within the recess 55.

As shown in Figure 9, the disc valve 46 carries peripherally arranged ramps 72A, there being three such ramps arranged at 120° intervals around the periphery of the disc valve. Each ramp has two inclined surfaces, one on its upper face and the other on its lower face. As the disc valve 46 is angularly turned within the recess 54, by longitudinal movement of the rod 64, these ramps 72A move into and out of sliding engagement with corresponding ramps extending downwardly from the upper grill 48 and downwardly from the lower grill 52, as shown dotted at 79A and 79B in Figure 7. When the ramps 72A on the disc valve 46 are clear of the ramps 79A and 79B on the grills, the disc valve 46 has maximum freedom of vibration within the valve chamber 51. This corresponds to the condition described with reference to Figures 1 to 5 where the lower grill 52 is in its lowermost position. When the ramps 72A on the disc valve 46 engage the ramps 79A,79B on the grills, vibration of the disc valve 46 is restricted. This therefore corresponds to the condition described with reference to Figures 1 to 5 where the lower grill 52 is in its uppermost position. Therefore, the disc valve 46 can be allowed to vibrate, and thus transmit pressure fluctuations between the chambers 22 and 37 thereby reducing the stiffness of the engine mount, by appropriately rotating the disc valve 46. Again, therefore, the disc valve can be arranged to short-circuit the conduit 38 both at high amplitude and at low amplitude vibrations.

The slopes of the ramps in the mechanism of Figures 6 to 9 are, like the mechanism of Figures 1 to 5, insufficiently steep for the mechanism to be reversible.

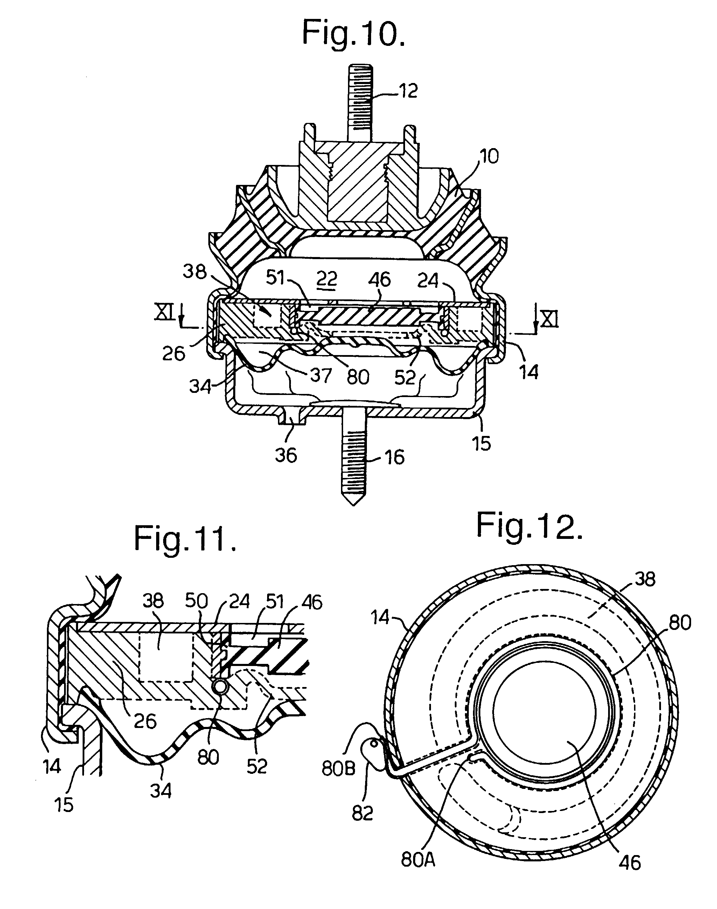

In the embodiment of Figures 10 to 12, the lower grill 52 is again fixed, like the embodiment of Figures 6 - 9. In this case, however, a flexible tube 80 lies within the valve chamber 51 between the bottom of this chamber and the lower edge of the flange 50 of the disc valve 46. One end 80A of the tube 80 is sealed. The other end extends outwardly through the armature 14, as shown in Figure 12, and is also sealed at 80B. The tube 80 contains an incompressible fluid. By means of a rotatable eccentric 82 (Figure 12), the region of the tube 80 adjacent the closed end 80B can be progressively flattened so as to increase the pressure within the tube 80. Such increase of pressure applies an increasing force, in an axial direction, to the flange 50, thus reducing the flexibility of the disc valve 46. When the pressure within the tube 80 is at its maximum value (corresponding to the position of the eccentric 82 shown in Figure 12), the disc valve 46 has limited freedom to vibrate, and will thus only be able to vibrate in response to low amplitude vibrations. This condition therefore corresponds to the condition in the embodiment of Figures 1 to 5 where the lower grill 52 is in its uppermost position. However, when the pressure in the tube 80 is reduced to a minimum, the disc valve 46 has maximum freedom to vibrate and can now vibrate in response to higher amplitude vibrations, thus reducing the stiffness of the engine mount.

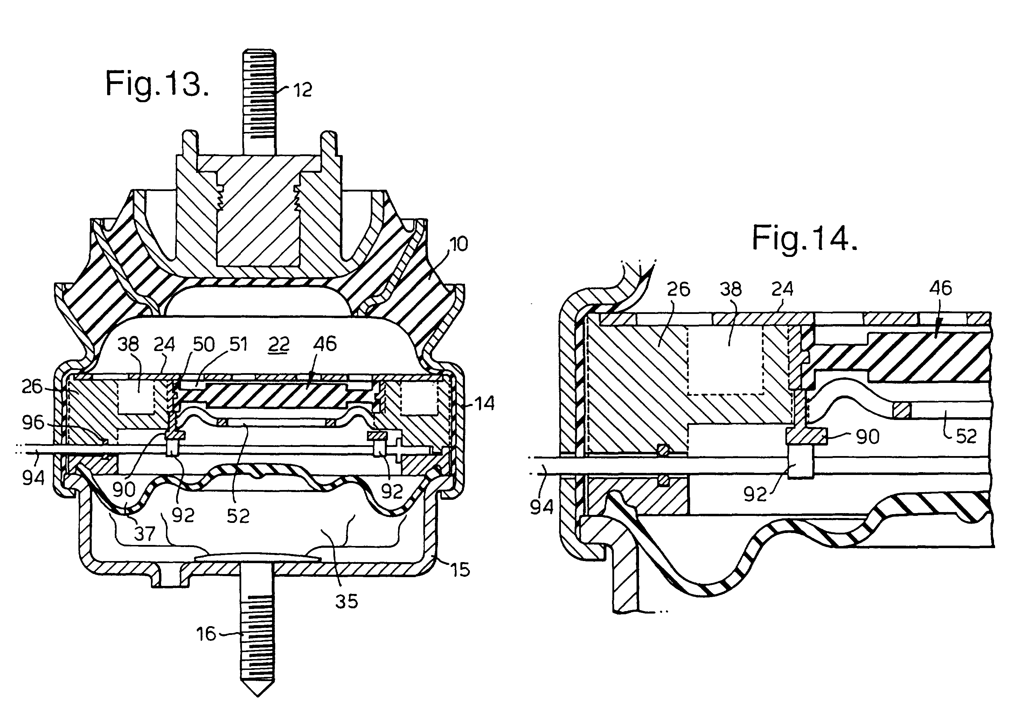

In the embodiment of Figures 13 and 14, again the lower grill 52 is fixed. In this embodiment, two or more pins 90 are provided which are vertically slidable through holes in the peripheral part of the lower grill 52 and make contact with the bottom peripheral surface of the flange 50 of the disc valve 46. Each pin 90 has an enlarged lower face in contact with a respective cam 92 carried by a rotatable shaft 94 which extends outwardly through the armature 14, being sealed by a O ring 96. Therefore, the pins 90 can be raised and lowered by appropriate rotation of the shaft 94. When the pins 90 are raised to their maximum extent, the disc valve 46 has very small freedom of movement and will thus only vibrate in response to low amplitude vibrations. When the shaft 94 is rotated so that the pins 90 are in their lowermost positions, however, the stiffness of the disc valve 46 is reduced and it has maximum freedom of movement. It can thus vibrate in response to higher amplitude vibrations and thus reduce the stiffness of the engine mount under such conditions.

It will be appreciated that the arrangements shown and described above for adjusting the permitted amount of vibration of the disc valve 46 are merely examples of different possible ways of achieving this effect.

## Claims

1. A vibration damping arrangement for damping relative vibrations between two rigid members, comprising a first rigid element (12) for connection to one of the rigid members, a second rigid element (16) for connection to the other rigid member, stiff resilient support material (10) interconnecting the two rigid elements (12,16) for resiliently flexing in response to the relative vibrations of the two rigid members, means defining a hollow chamber (22) containing hydraulic fluid, the hollow chamber (22) having a flexible wall (10) arranged to flex in response to the relative vibrations whereby to cause corresponding pressure variations within the hollow chamber (22), and valve means (44) operable to at least partially release the pressure in the chamber (22), characterised by control means (52,64;46;64;46,80;46,90) for selectively rendering the valve means (44) operative.

2. An arrangement according to claim 1, characterised in that the control means (52,64;46,64;46,80;46,90) selectively renders the valve means (44) operative in dependence on the vibrations.

3. An arrangement according to claim 2, characterised in that the control means (52,64;46,64;46,80;46,90) selectively renders the valve means (44) operative in dependence on the amplitude of the vibrations.

4. An arrangement according to any preceding claim, characterised in that the valve means (44) comprises a valve member (46) subjected on one side to the pressure within the chamber (22) and capable when the valve means (44) is in a first setting of moving substantially freely in response to the pressure variations in the hollow chamber (22) and substantially incapable, when the valve means (44) is in a second setting, of so moving, and in that the control means (52,64;46,64;46,80;46,90) comprises means for switching the valve means (44) between the first and second settings.

5. An arrangement according to claim 4, characterised in that the valve means (44) has a plurality of further settings between the first and second settings and in each of which further settings the valve member (46) is capable of a different respective predetermined amount of movement in response to the pressure variations in the hollow chamber (22), and in that the control means (52,64;46,64;46,80;46,90) is operative to switch the valve means into any such setting.

6. An arrangement according to claim 4 or 5, characterised in that the valve member (46) is a flexible member mounted adjacent to a control member (52), and in that the control means comprises means (64) for moving the control member (52) towards and away from the valve member (46) so as to adjust the degree of permitted flexing thereof.

7. An arrangement according to claim 6, characterised in that the control member (52) is mounted adjacent to and substantially parallel to a further member (54), the members (52,54) carrying cooperating inclined surfaces (72,73) whereby relative rotation of the two members (52,54) moves the control member (52) towards or away from the valve member (46), and in that the control means (64) comprises means for relatively rotating the two members (52,54).

8. An arrangement according to claim 6 or 7, characterised in that the control member (52) comprises a member outside the hollow chamber (22) and apertured to apply an external pressure to the face of the valve member (46) outside the hollow chamber (22).

9. An arrangement according to claim 8, characterised by a further apertured member (48) inside the hollow chamber (22), the two apertured members (48,52) defining a gap (51) within which the valve member (46) is movable.

10. An arrangement according to claim 4 or 5, characterised in that the valve member (46) is mounted adjacent to and parallel to a further member (52), the two members (46,52) carrying cooperating inclined surfaces (72A,79A,79B) whereby relative rotation of the two members (46,52) moves the valve member (46) towards and away from the further member (52), and in that the control means comprises means (62A) for relatively rotating the valve member (46) and the further member (52).

11. An assembly according to claim 4 or 5, characterised in that the control means comprises means (80;90) for adjusting the flexibility of the valve member (46).

12. An arrangement according to claim 11, characterised in that the means for adjusting the flexibility of the valve member (46) comprises means (80;90) for varying a force applied to the valve member (46).

13. An arrangement according to claim 12, characterised in that the valve member (46) has a peripheral portion (50) held in mounting means (51) and integral with and surrounding a more flexible portion, and in that the control means comprises (80;90) means for applying a varying force between the periphery (50) of the valve member (46) and the mounting means.

14. An arrangement according to claim 13, characterised in that the mounting means comprises housing means (51) for embracingly receiving the peripheral portion (50) of the valve member (46), and elongate flexible pressurisable means (80) mounted in the housing means (51) and between the housing means (51) and the peripheral portion (50), whereby an increase in pressure in the pressurisable means (80) increases a clamping force applied to the peripheral portion (50).

15. An arrangement according to claim 14, characterised in that the elongate flexible pressurisable means comprises a flexible tube (80) extending along the peripheral portion (50).

16. An arrangement according to claim 15, characterised in that the housing means (51) and the flexible tube (80) extend substantially completely around the periphery of the valve member (46).

17. An arrangement according to any one of claims 14 to 16, characterised in that the elongate pressurisable means has a portion (80B) extending outside the housing means (51), and in that the control means comprises means (82) for applying mechanical pressure to that portion (80B) for increasing the pressure within the pressurisable means (80).

18. An arrangement according to claim 13, characterised in that the mounting means comprises housing means (51) for embracingly receiving the peripheral portion (50) of the valve member (46), and by at least one force-applying member (90) extending into the housing means (51) for applying a force to the peripheral portion (50) to cause it to be held clamped by the housing means (51), and in that the control means comprises means (92) for varying the force applied by the force applying member (90).

19. An arrangement according to claim 18, characterised in that the control means comprises cam means (92) engaging the force-applying member (90) outside the housing means (51) and rotatable to vary the force applied thereto.

20. An arrangement according to any one of claims 10 to 19, characterised in that the valve member (46) is mounted between two apertured members (48,52), through one of which the pressure within the hollow chamber (22) is applied to one side of the valve member (46) and through the other of which an external pressure is applied to the other side of the valve member (46).

21. An arrangement according to any one of claims 8,9 and 20, characterised in that the external pressure is atmospheric pressure.

22. An arrangement according to any preceding claim, characterised by a second hollow chamber (37), and a conduit (38) extending between the two chambers (22,37) whereby the pressure variations in the first-mentioned chamber (22) tend to cause transfer of the fluid between the two chambers (22,37) through the conduit (38) such that resistance to fluid flow through the conduit (38) tends to damp the vibrations.

23. An arrangement according to claim 22, characterised in that the valve means (44) comprises movable means (46) forming part of a wall between the two hollow chambers (22,37).

24. An arrangement according to claim 22 or 23, characterised in that the pressure in the second hollow chamber (37) is substantially atmospheric pressure.

25. An arrangement according to any preceding claim, characterised in that the means defining the flexible wall of the first-mentioned hollow chamber (22) comprises the stiff resilient material (10).

26. An arrangement according to any preceding claim for damping relative vibrations between the engine of a vehicle and the body of the vehicle, characterised in that one rigid element (12) is adapted for connection to one of the engine and the vehicle body and the other rigid element (16) is adapted for attachment to the other of the engine and the body.

27. An arrangement according to claim 26, characterised in that the control means (52,64;46,64;46,80;46,90) includes means responsive to the speed of the engine.
